# EUROPÄISCHE PATENTSCHRIFT

(11) **EP 1 435 088 B1**
(45) Veröffentlichungstag und Bekanntmachung des Hinweises auf die Patenterteilung: **25.07.2007**
(21) Anmeldenummer: 02774654.4
(22) Anmeldetag: 26.09.2002
(51) Int. Cl.: G10L 15/22, G10L 15/26

(54) **DYNAMISCHER AUFBAU EINER DIALOGSTEUERUNG AUS DIALOGOBJEKTEN**
DYNAMIC CREATION OF A CONVERSATIONAL SYSTEM FROM DIALOGUE OBJECTS
CONSTRUCTION DYNAMIQUE D'UNE COMMANDE CONVERSATIONNELLE A PARTIR D'OBJETS DE DIALOGUE

(30) Priorität: 26.09.2001 DE 10147341
(43) Veröffentlichungstag der Anmeldung: 07.07.2004
(73) Patentinhaber: VOICEOBJECTS AG, 51429 Bergisch Gladbach (DE)
(72) Erfinder: WINTERKAMP, Tiemo, 53773 Hennef (DE); SCHULZ, Jörg, 51503 Rösrath (DE)
(74) Vertreter: Grünecker, Kinkeldey, Stockmair & Schwanhäusser Anwaltssozietät
(86) Internationale Anmeldenummer: PCT/EP2002/010814
(87) Internationale Veröffentlichungsnummer: WO 2003/030149

(56) Entgegenhaltungen:
- WO-A-00/65814
- WO-A-96/26484
- US-A- 5 913 195
- US-B1- 6 173 266
- LUZ SATURNINO: "STATE-OF-THE-ART SURVEY OF EXISTING DIALOGUE MANAGEMENT TOOLS" , 24. November 1999 (1999-11-24), XP002142225 Gefunden im Internet: <URL:http://www.disc2.dk/tools/d2.7a/d27a. html> [gefunden am 2000-06-21]
- SUTTON S. ET AL: 'Universal Speech tools: the CSLU toolkit' PROC. INTERNATIONAL CONFERENCE ON SPOKEN LANGUAGE PROCESSING 1998, Seiten 3221 - 3224, XP000923270

## Beschreibung

Die Erfindung betrifft ein Verfahren und eine Vorrichtung zum Aufbau einer in einem Computersystem implementierten Dialogsteuerung sowie ein zugehöriges Computersystem. Vorzugsweise betrifft die Erfindung insbesondere den Aufbau von sprachgesteuerten Diensten, die einem Dialogpartner über eine Telefonverbindung zu dem Computersystem bereitgestellt werden. Die Dialogsteuerung wird vorzugsweise dynamisch in Laufzeit generiert.

Dialogsteuerungen und insbesondere Sprachsteuerungen werden gegenwärtig in vielen Geschäftsfeldern angewendet. Es kommen hierbei zahlreiche Anwendungen in Betracht, die sprachgesteuerte Schnittstellen benötigen, um den Benutzern durch Sprache aktivierte und gesteuerte Dienste anzubieten. Beispielsweise wird hierdurch Mitarbeitern, Partnern und Lieferanten der Zugriff auf Untemehmensinformationen zu jeder Zeit er möglicht. Auch lassen sich Prozesse und Kontaktkanäle zu den Kunden verbessern. Somit sind über Sprachsteuerungen auch Kundenmanagementlösungen realisierbar.

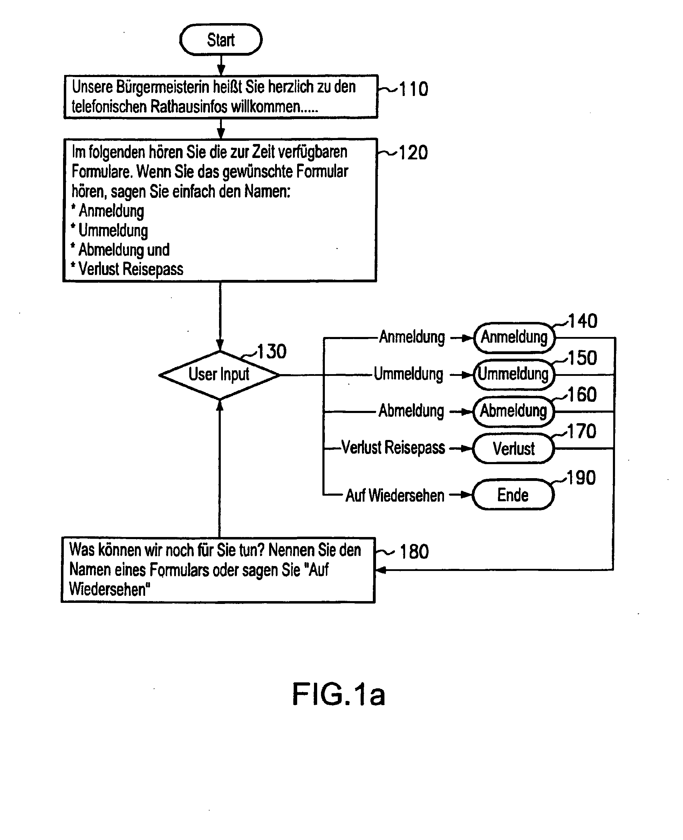

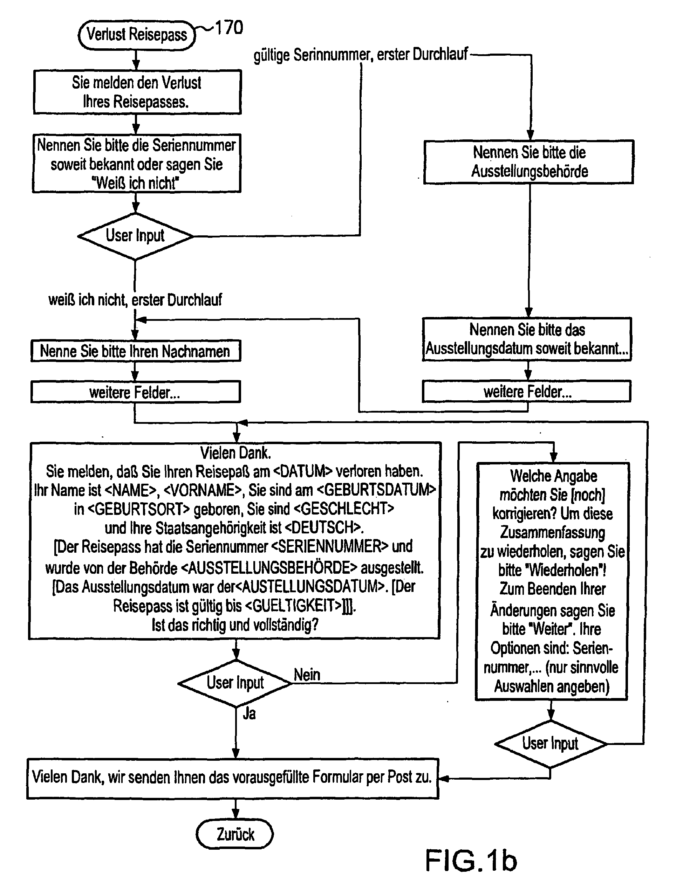

Ein Beispiel für die Anwendung einer Sprachsteuerung ist in den FIG. 1a und 1b angegeben. In diesem Beispiel bietet ein Bürgermeisteramt Verwaltungsdienstleistungen dem einzelnen Bürger an. Der Bürger wählt ein vom Bürgermeisteramt bzw. Rathaus betriebenes Computersystem telefonisch an und führt einen Dialog mit dem Computersystem. Der Dialog basiert auf gesprochener Sprache, so dass der Anrufer seine Wünsche und Antworten auf gestellte Fragen verbal ausdrücken kann und das Computersystem ebenfalls verbal mit dem Anrufer interagiert.

Wie der FIG. 1a zu entnehmen ist, wird dem Anrufer vom Computersystem zunächst eine Willkommensnachricht in Schritt 110 gesprochen. Im nachfolgenden Schritt 120 wird dem Anrufer dann ein Menü präsentiert, das mehrere Auswahloptionen enthält. Der Anrufer wird aufgefordert, eine dieser Optionen auszuwählen, und spricht dann im Schritt 130 das entsprechende Wort, das seine gewünschte Auswahloption bezeichnet. Abhängig von der Auswahl des Anrufers wird das Computersystem nun dahingehend gesteuert, eine Verzweigung vorzunehmen. Wird eines der im Menü gesprochenen Bezeichnungen vom Anrufer wiederholt, so verzweigt das Computersystem in einen der Unterprozesse 140, 150, 160 oder 170. Nach Rückkehr aus dem Unterprozess wird der Anrufer gegebenenfalls in Schritt 180 aufgefordert, den Dialog zu beenden oder eine andere Auswahloption zu wählen. Spricht der Anrufer das zur Beendigung des Dialogs vorgesehene Schlüsselwort, so verzweigt das Computersystem zu einem Beendigungsprozess 190, der schließlich im Unterbrechen der Telefonverbindung endet.

In FIG. 1b ist exemplarisch für die Unterprozesse 140, 150, 160 und 170 der Unterprozess 170 näher dargestellt, mit dessen Hilfe verdeutlicht werden soll, dass durch wiederholte aufeinanderfolgende Verzweigungen und Benutzereingaben ein hohes Maß an Komplexität erreicht werden kann. Beispielsweise kann der Verlauf der Dialogsteuerung mehrere Durchläufe haben, die davon abhängig gemacht werden können, ob vorhergehende Eingaben korrekt bearbeitet werden konnten. Der Unterpozess kann seinerseits wieder einen oder mehrere Menüauswahlen enthalten, die jeweils wiederum in eine Vielzahl von Unterprozessen verzweigen.

Es ist daher ersichtlich, dass Dialogsteuerungen und insbesondere Sprachsteuerungen im Einzelfall sehr komplex strukturiert sein können, so dass der Aufbau einer solchen Dialogsteuerung einen enormen Programmieraufwand bedeutet. Der Aufbau von Dialogsteuerungen ist daher auch stets mit hohen Kosten verbunden.

Ein weiteres Problem mit der herkömmlichen Programmierung von Dialogsteuerungen ergibt sich aus dem Umstand, dass Dialogsteuerungen stets an die jeweiligen Anwendungsbereiche angepasst werden müssen. Beispielsweise ergeben sich für Anwendungen einer Autoverleihfirma andere Anforderungen als für die eines Bürgermeisteramtes, da abgesehen von Standardabfragen auch gezielte Abfragen über die Dauer der Leihwagenmiete sowie ein personalisierter Verkehrsinformationsdienst von der Dialogsteuerung umfasst sein können. Dies schließt beispielsweise die Online-Abfrage von existierenden Datenbanken ein. Andere Anwendungen, wie etwa Anwendungen in Banken und Versicherungen, Fluggesellschaften, Flughäfen, Freizeituntemehmen, Interviewservices, Transportunternehmen und in der Tourismusbranche, basieren jeweils auf anderen Voraussetzungen und erfordern daher eine jeweils getrennte Programmierung. Beispielsweise stellt Mehrsprachigkeit ein Konzept dar, das in manchen Dialogablaufanwendungen sinnvoll ist, während es in anderen Anwendungen allenfalls von randständiger Bedeutung ist.

Aus den vorgenannten Gründen ist zur Realisierung einer Dialogablaufsteuerung nach dem Stand der Technik ein beträchtlicher Programmieraufwand erforderlich. Zur Realisierung einer sprachgesteuerten Ablaufsteuerung treten zudem die besonders komplexen Randbedingungen der Sprachsteuerung hinzu. Zur Standardisierung von sprachgesteuerten Vorgängen wird bereits im Stand der Technik VoiceXML verwendet. VoiceXML soll die Programmierung und den Abruf webbasierter, personalisierter, interaktiver sprachgesteuerter Dienste ermöglichen. Ein einfaches Beispiel für eine in VoiceXML realisierte Dialoglogik ist beispielsweise durch den folgenden Code gegeben:

```
<?xml version="1.0"?>
  <vxml version="1.0">
    <form>
      <field name="drink">
        <prompt>
          Would you like coffee, tea, milk, juice or nothing?
        </prompt>
        <gramnar src="drink.gram" <type="application/x-jsgf"/>
      </field>
      <block>
        <submit next="http://www.drink.exanple/drink2.asp"/>
      </block>
    </form>
  </vxml>
```

Hierbei definiert "drink.gram" eine Grammatik zur Beschreibung des erwarteten Spracherkennungsresultats für die vom System erkannten Anwendungsfelder. Beispielsweie kann die erwähnte Grammatik die Auswahloptionen Kaffee, Tee, Milch, Saft etc. enthalten, es können jedoch auch Wortkombinationen, Homonyme und Synonyme vorkommen.

Die Realisierung solcher Sprachsteuerungen stellt an den Anwendungsdesigner die Anforderung ausreichender Programmierkenntnisse und hinreichenden Verständnisses der verschiedenen zur Anwendung kommenden Sprachtechnologien. Sprachdialogsteuerungen lassen sich somit wiederum nur mit großem Aufwand und unter hohen Kosten realisieren.

Aus der US 6,173,266 B1 ist ein System und ein Verfahren zum Entwickeln interaktiver Sprachanwendungen bekannt. Eine Vielzahl von Dialogmodulen sind in einem Sprachverarbeitungssystem gespeichert, wobei jedes Dialogmodul computerlesbare Instruktionen enthält, um eine vordefinierte interaktive Dialogaufgabe zu bewältigen. In Erwiderung auf eine Benutzereingabe werden Dialogmodule ausgewählt und in einer den Gesprächsfluss definierenden Reihenfolge miteinander verbunden.

Luz Saturnino, "State-Of-The-Art Survey Of Existing Dialogue Management Tools", XP002142225 ist ein Überblick über verschiedene Dialogmanagementtools.

Die WO 96/26484 A2 beschreibt eine graphische Umgebung zum Verwalten und Entwickeln von Anwendungen. In der Umgebung erfolgt das Aufbauen und gemeinsame Verwenden von Anwendungskomponenten in größerem Maßstab durch den Endbenutzer. Die beschriebene Technik ermöglicht die Erzeugung standardisierter Schnittstellen, die visuell dargestellt werden, in Modulen.

S. Sutton et al., "Universal Speech Tools: The CSLU Tool Kit" pros. International Conference Of Spoken Language Processing, 1998, Seiten 3221 bis 3224 beschreibt ein Tool Kit, das Lernmaterialien, Texterstellungstools und Kerntechnologien, wie etwa Spracherkennung, Text-Sprach-Synthese, Gesichtsanimation und das Lesen von Sprache integriert.

Aus der US 5,913,195 ist eine Sprachantworteinheit bekannt, die in einer Anrufflusszusammenfassung ein Szenario-Icon aufweist, das die Identifikation eines Anrufertyps darstellt.

Der Erfindung liegt daher die Aufgabe zugrunde, ein Verfahren und eine Vorrichtung zum Aufbau einer in einem Computersystem implementierten Dialogsteuerung sowie ein zugehöriges Computersystem bereitzustellen, die eine einfache und schnelle Erzeugung eines dialoggesteuerten Dienstes ohne Programmierkenntnisse des Benutzers ermöglichen.

Diese Aufgabe wird durch die in den unabhängigen Ansprüchen definierte Erfindung gelöst.

Erfindungsgemäß lassen sich Dialogablaufsteuerungen aus wiederverwendbaren Dialogobjekten zusammensetzten, die sich durch Befüllen von Datenfeldern der Dialogobjekte an die jeweilige Anwendung spezifisch anpassen lassen. Da sich dies mittels einer einfachen Softwareplattform realisieren lässt, kann der Benutzer, der eine sprachgesteuerte Anwendung designen möchte, die Ablaufsteuerung in einfacher Weise ohne detaillierte Kenntnis von Sprachtechnologien aufbauen. Somit wird dem Anwendungsdesigner eine gesteigerte Produktivität bei verbessertem Service geboten. Ferner werden die Kosten der Erzeugung einer Dialoganwendung reduziert.

Die Verwendung von Dialogobjekten ermöglicht ferner die freie Skalierbarkeit der Anwendung. Es können somit Dialogsteuerungen in einfacher Weise generiert werden, die ein hohes Maß an Komplexität aufweisen und dennoch auf den jeweiligen Vorgang spezifisch angepasst sind. Hierdurch können Unternehmen und Organisationen, die eine Dialogsteuerung bisher aus Komplexitätsgründen nicht haben durchführen können, ihre Geschäftsprozesse in hohem Maß automatisieren, ihre Produktivität steigern und die Wertschöpfungskette verbessern.

Bevorzugte Ausgestaltungen sind in den Unteransprüchen angegeben.

Besondere Vorteile entstehen durch die dynamische Erzeugung des zur Durchführung des Dialogs erforderlichen Programmiercodes erst zur Laufzeit, d.h. bei Initiierung des Dialogs. Zum einen werden hierdurch die Systemressourcen bei der Erstellung der Dialogsteuerung signifikant entlastet. Hauptsächlich ergibt sich aber der Vorteil, dass bestehende, also bereits erstellte Dialogsteuerungen in einfacher und auch automatischer Weise an neue Gegebenheiten angepasst und beispielsweise um neue Grammatiken ergänzt werden können. Diese Anpassung kann somit auch während des Dialogs erfolgen.

Die Erfindung ist ferner insbesondere von Vorteil zur Erzeugung einer Sprachsteuerung, da, wie oben ausgeführt, die Realisierung einer herkömmlichen Sprachsteuerung mit besonders aufwendigen Programmiertechnologien verbunden ist. Durch die Erzeugung von Sprachdialogen lassen sich somit in einfacher Weise Telefonsprachsysteme, aber auch sprachaktivierte Datendienste über das Internet oder im Client-Server-Betrieb, realisieren.

### BESCHREIBUNG DER FIGUREN

Bevorzugte Ausgestaltungen der Erfindung werden nun unter Bezugnahme auf die Figuren näher erläutert, in denen:
FIG. 1a ein Flussdiagramm ist, das eine sprachgesteuerte Dialogablaufsteuerung verdeutlicht;
FIG. 1b ein Flussdiagramm ist, das einen Unterprozess des in FIG. 1a gezeigten Ablaufs verdeutlicht;
FIG. 2a eine Darstellung eines Bildschirminhalts zur Eingabe eines Datenfeldinhaltes ist;
FIG. 2b eine Darstellung eines Bildschirminhalts zur Auswahl eines Dialogobjekts ist;
FIG. 3 eine Darstellung eines Bildschirminhalts zum Empfang von Benutzereingaben nach einem anderen Ausführungsbeispiel der Erfindung ist;
FIG. 4 die Komponenten verdeutlicht, die zur Implementierung der Erfindung und zur Durchführung der Dialogsteuerung gemäß der vorliegenden Erfindung verwendet werden können;
FIG. 5a ein Flussdiagramm ist, das ein bevorzugtes Ausführungsbeispiel des erfindungsgemäßen Verfahrens zum Erstellen einer Dialogablaufsteuerung verdeutlicht;
FIG. 5b ein Flussdiagramm ist, das ein bevorzugtes Ausführungsbeispiel des erfindungsgemäßen Verfahrens zum Durchführen einer Dialogablaufsteuerung verdeutlicht;
FIG. 6a eine schematische Darstellung eines Ausführungsbeispiels des Prompt-Basisobjekts ist;
FIG. 6b eine schematische Darstellung eines anderen Ausführungsbeispiels des Prompt-Basisobjekts ist;
FIG. 6c eine schematische Darstellung eines Ausführungsbeispiels des Sequenz-Basisobjekts ist;
FIG. 6d eine schematische Darstellung eines Ausführungsbeispiels des Konditional-Basisobjekts ist;
FIG. 6e eine schematische Darstellung eines Ausführungsbeispiels des Eingabe-Basisobjekts ist;
FIG. 7a bis 7d schematische Darstellungen von in der Objekthierarchie höher angeordneten Dialogobjekten sind; und
FIG. 8 eine Darstellung eines Bildschirminhalts einer Objekteditorsoftware nach einem Ausführungsbeispiel der Erfindung ist.

### DETAILLIERTE BESCHREIBUNG DER ERFINDUNG

Im folgenden werden nun bevorzugte Ausgestaltungen der Erfindung näher erläutert.

Dialogobjekte gemäß der Erfindung sind Datenelemente, die Datenfelder enthalten. Erfindungsgemäß werden dem Anwendungsdesigner (Benutzer) mehrere Dialogobjekte zur Auswahl gestellt, die weiter unten näher erläutert werden. Hat der Benutzer ein Dialogobjekt ausgewählt, so wird ihm die Gelegenheit gegeben, die Datenfelder des ausgewählten Dialogobjekts zu befüllen. Der Inhalt der Datenfelder dient dazu, das jeweilige Dialogobjekt an die spezifische Dialoganwendung anzupassen.

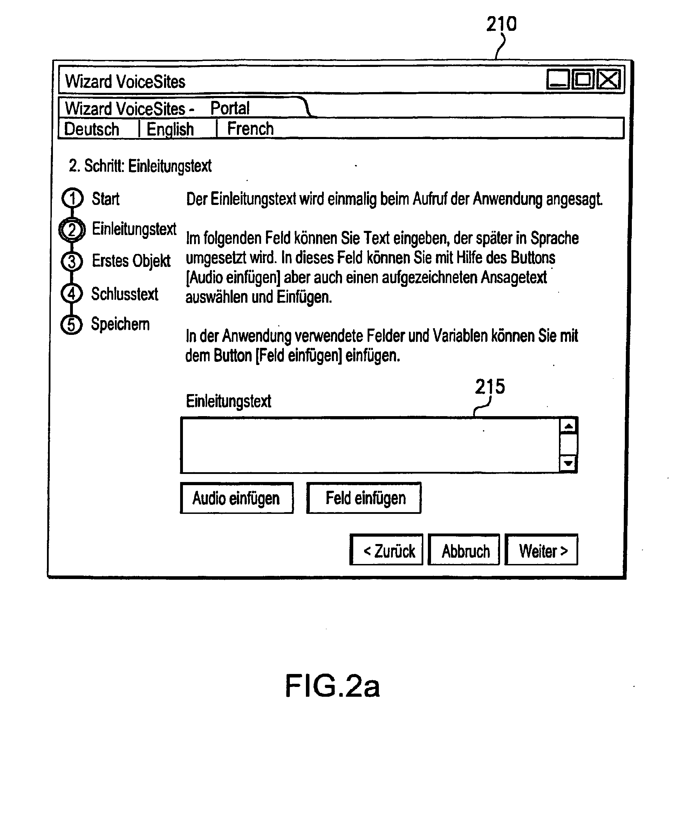

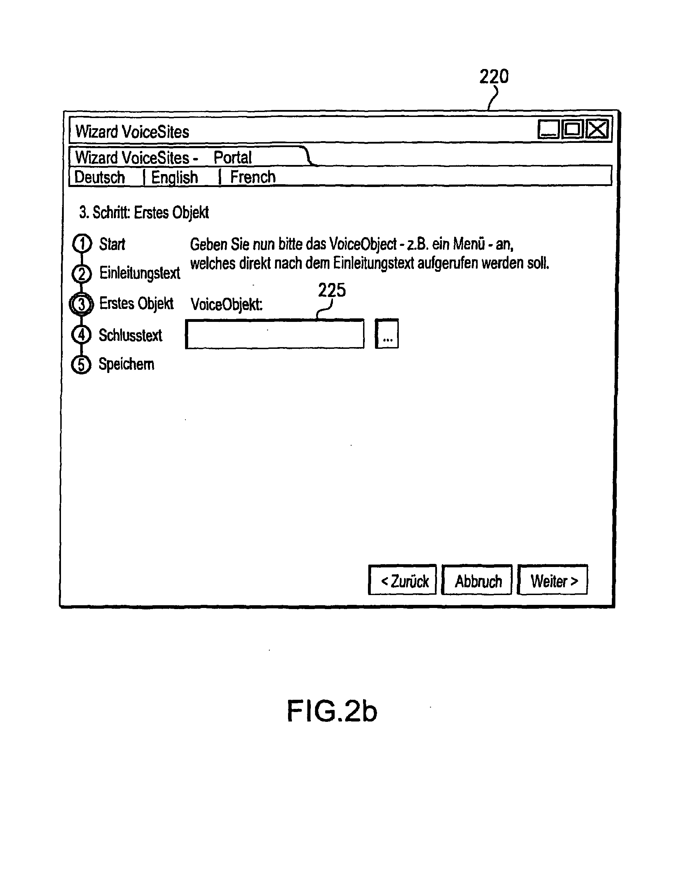

Der Vorgang des Auswählens von Dialogobjekten und Befüllen von Datenfeldern wird nun unter Bezugnahme auf die FIG. 2a und 2b erläutert.

In FIG. 2a wird dem Benutzer eine Bildschirmdarstellung präsentiert, die ihn durch den Prozess der Erzeugung der Dialogsteuerung leitet. Ist der Benutzer zum zweiten Schritt "Einleitungstext" gelangt, in dem er einen Text zur Einleitung eingeben kann, so hat der Benutzer durch Auswahl des zweiten Schritts bereits das Dialogobjekt "Prompt" ausgewählt, das dazu dient, dem Dialogpartner eine Mitteilung zukommen zu lassen. Die Mitteilung kann der Benutzer in das Feld 215 eintragen. Durch Eingabe eines Textes in das Feld 215 wird das Datenfeld des Prompt-Dialogobjekts befüllt. Beispielsweise kann der Benutzer in das Feld 215 den Text "Unsere Bürgermeisterin heißt Sie herzlich zu den telefonischen Rathausinfos willkommen" eingeben, um die Sprachansage 110 in dem in FIG. 1a gezeigten Beispiel zu definieren.

Während die Auswahl eines Dialogobjekts in FIG. 2a implizit durch Ansteuerung des Schrittes 2 der Erzeugungsprozedur erfolgt ist, kann dem Benutzer, wie FIG. 2b zeigt, auch ein Auswahlfeld 225 angeboten werden, mit dem der Benutzer eines einer Vielzahl von Dialogobjekten explizit auswählen kann. Die Auswahl kann durch Selektion eines Elements einer angezeigten Liste von Dialogobjekten erfolgen oder auch durch Texteingabe des Namens des entsprechenden Dialogobjekts.

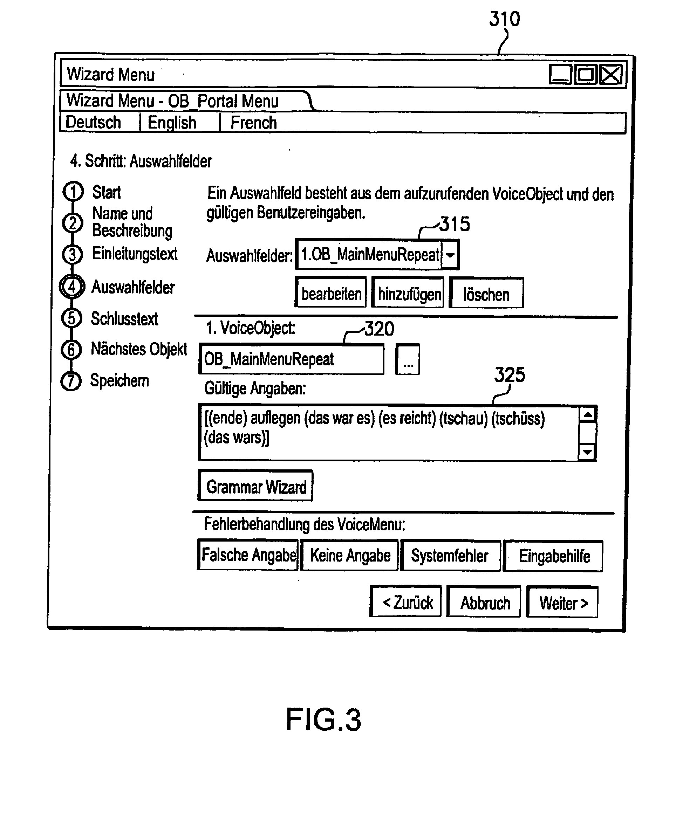

Ein detaillierteres Beispiel der Auswahl eines Dialogobjekts und Eingabe eines Inhalts für das Datenfeld ist in FIG. 3 gezeigt, wo dem Benutzer Auswahlfelder 315, 320 sowie Eingabefelder 325 gleichzeitig zur Verfügung gestellt werden.

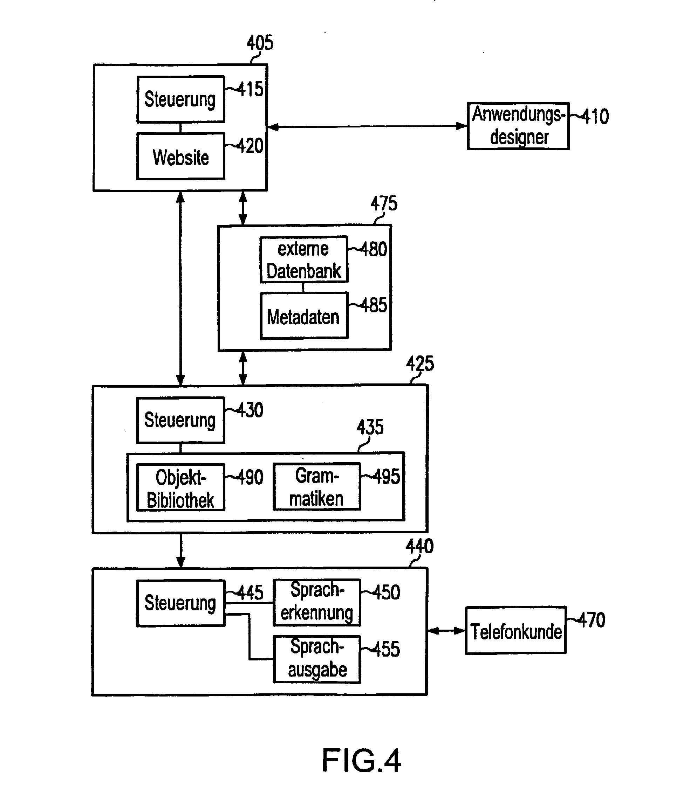

FIG. 4 zeigt die Gesamtanordnung von Systemkomponenten zur Durchführung der Erfindung. Ein Anwendungsdesigner 410 greift vorzugsweise über das Internet auf einen Webserver 405 zu, der dem Anwendungsdesigner die in den FIG. 2a, 2b und 3 gezeigten Fenster präsentiert. Der Anwendungsdesigner 410 durchläuft die verschiedenen Schritte zur Erstellung der Dialogablaufsteuerung und bestätigt abschließend den Vorgang. Die Steuerung 415 des Webservers 405 überträgt dann die vom Benutzer ausgewählten und eingegebenen Daten in Form von Metadaten an einen weiteren Server 425. Alternativ können die Metadaten in einer Datenbank 485 eines externen Servers 475 abgelegt werden, auf den der Server 425 zugreifen kann.

Der Server 425 verfügt über einen Speicher 435, in dem Objektbibliotheken 490 und Sprachgrammatiken 495 abgelegt sind. Der Speicher 435 stellt zusammen mit der Steuereinheit 430 des Servers 425 somit ein Generierungs-Subsystem dar, das die empfangenen Metadaten analysiert und einen Programmiercode erzeugt, der dann an das Computersystem 440 übermittelt wird. Vorzugsweise erfolgt die Analyse der Metadaten und die Erzeugung und Übermittlung des Programmiercodes dynamisch, d.h. in Laufzeit während des Dialogs. Das Computersystem 440 führt dann den Dialog mit dem Dialogpartner 470 gemäß den in dem erzeugten Programmiercode festgelegten Befehlsstrukturen aus.

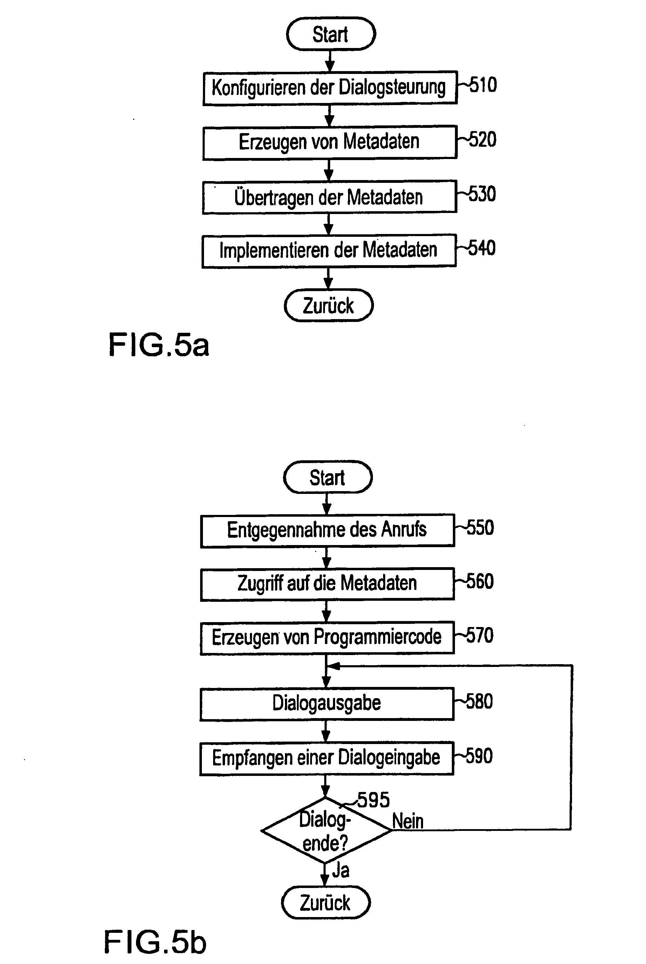

Die einzelnen Verfahrensschritte des Prozesses der Erstellung einer Dialogsteuerung sind in FIG. 5a dargestellt. Nachdem der Anwendungsdesigner 410 in Schritt 510 durch Auswahl von Dialogobjekten und Befüllen von Datenfeldern die Dialogsteuerung konfiguriert hat, werden in Schritt 520 vom Webserver 405 Metadaten erzeugt und im Schritt 530 an den Server 425 oder den Server 475 übertragen. Die Metadaten werden dann im Schritt 540 durch Speicherung in einer Datenbank 485 oder im Speicher 435 implementiert.

Obgleich die erfindungsgemäßen Verfahrensschritte und Systemkomponenten für alle Arten von Dialogablaufsteuerungen verwendet werden können, einschließlich einer Dialogsteuerung durch WAP-Endgeräte und andere text- und graphikbasierte Kommunikationsgeräte wie etwa SMS-, EMS- und MMS-Geräte (Short, Extended und Multimedia Messaging Services), wird im folgenden die bevorzugte Ausgestaltung der Sprachsteuerung als Beispiel behandelt. In diesem Beispiel ist der Dialogpartner vorzugsweise ein Telefonkunde 470, der mit dem Computersystem 440 in Telefonverbindung steht. Das Computersystem 440 verfügt hierzu über eine Spracherkennungseinheit 450 sowie über eine Sprachausgabeeinheit 455.

Der Prozess der Durchführung einer Dialogsteuerung ist in einem bevorzugten Ausführungsbeispiel in FIG. 5b gezeigt. Die Spracherkennungseinheit 450 nimmt in Schritt 550 das vom Telefonkunden 470 gesprochene Wort als Audiodaten in Empfang, analysiert die Audiosequenz und generiert Daten, die von der Steuerung 445 des Computersystems 440 verarbeitet werden können. Als Spracherkennungseinheit können ASR-Systeme (Automated Speech Recognition) verwendet werden.

Dann greift im Schritt 560 die Steuerung 445 auf die im Speicher 435 oder der Datenbank 485 abgelegten Metadaten zu und erzeugt in Schritt 570 - in Laufzeit, also dynamisch - den Programmiercode, der für die weitere Sprach- und Dialogsteuerung erforderlich ist.

Die Sprachausgabeeinheit 455 führt nun in Schritt 580 den Sprachausgabeprozess durch und erzeugt Audiosignale, die an den Telefonkunden 470 gesendet werden können. Die Sprachausgabeeinheit kann zum einen eine Sprachsyntheseeinheit sein, die aus einer Buchstabenfolge eine entsprechende Audiosequenz erzeugt. Solche TTS-Systeme (Text-To-Speech) erzeugen eine Computerstimme, die den eingegebenen Text quasi vorliest. Die Sprachausgabeeinheit kann jedoch auch eine Abspielsoftware oder - hardware enthalten, die eine Audiodatei bei Bedarf abspielt. Audiodateien sind beispielsweise wav-Dateien.

Schließlich wird in Schritt 595 ermittelt, ob der Dialog fortgeführt werden soll, und es wird dementsprechend zu Schritt 580 zurückverzweigt. In einer alternativen Ausgestaltung wird zu Schritt 560 zurückverzweigt, nämlich wenn für die Fortführung des Dialogs weitere Metadaten zu lesen sind.

In einer bevorzugten Ausführungsform der Erfindung sind die Spracherkennungseinheit 450 und die Sprachausgabeeinheit 455 durch eine in der Steuerung 445 implementierte VoiceXML-Schicht bzw. -Engine gekapselt und werden hierüber angesprochen.

Entsprechend der Möglichkeit, eine Sprachausgabe durch Sprachsynthese oder das Abspielen einer Audiodatei zu bewerkstelligen, wird dem Anwendungsdesigner 410 bei der Erzeugung der sprachgesteuerten Dialogablaufsteuerung die Möglichkeit eröffnet, einen Text als Buchstabenfolge einzugeben oder aber eine Audiodatei auszuwählen oder hochzuladen. Wie in FIG. 2a zu sehen ist, kann der Anwendungsdesigner 410 beide Möglichkeiten durch Eingabe in das Feld 215 bzw. durch Auswahl der darunterliegenden Schaltflächen realisieren. Das zugehörige Datenfeld des Dialogobjekts speichert dann entweder eine Buchstabenfolge, die vom TTS-System zu Sprache synthetisiert wird, oder eine Audiodatei bzw. einen Verweis auf eine solche.

Wie bereits erwähnt und aus FIG. 5b ersichtlich, wird der Programmiercode dynamisch erzeugt. Diese automatische dynamische Generierung schließt vorzugsweise auch die Erzeugung der für die Dialogführung erforderlichen Grammatikkomponenten 495 ein. Die Generierung der Grammatikkomponenten kann vorzugsweise auf der Basis von VoiceXML erfolgen.

Grammatiken können als statische Elemente zu Dialogobjekten hinterlegt werden, aber auch dynamisch sein. Bei statischen Grammatiken sind der Inhalt, also die zu erkennenden Wortsequenzen, bereits zum Erstellungszeitpunkt der Dialogsteuerung bekannt. Die Grammatiken können dann gegebenenfalls bereits im Vorfeld übersetzt werden. Sie werden schließlich direkt an den Server 440 weitergegeben.

Dynamische Grammatiken werden erst zur Laufzeit, d.h. während des Dialogs, erstellt. Dies ist beispielsweise von Vorteil, wenn während des Dialogs auf eine externe Datenbank zugegriffen werden muss und die Ergebnisse der Abfrage dann dem Dialogpartner zur Auswahl gestellt werden sollen. In einem solchen Fall werden die möglichen Antwortoptionen in Form einer Grammatik aus den von der Datenbank abgefragten Daten erstellt, um hiermit die Spracherkennungseinheit 450 zu versorgen. Ferner gestatten dynamische Grammatiken die Änderung des Ablaufverhaltens von Dialogobjekten während des Dialogs. Beispielsweise kann so in einem Dialog von "du" auf "Sie" umgeschaltet werden.

Im folgenden werden Dialogobjekte am Beispiel von Sprachobjekten näher erläutert. Neben einem Header, der den Namen des Dialogobjekts enthält, verfügt ein solches Dialogobjekt über mehrere Segmente, nämlich ein Ausgabe-Datenfeld, ein Eingabe-Datenfeld, ein Antwortoptions-Datenfeld, ein Grammatik-Datenfeld und ein Logik-Datenfeld. Alle diese Segmente enthalten Informationen, die eine Aufforderung an den

Dialogpartner oder einen Parameter angeben, die bei Durchführung der Dialogsteuerung die Auswertung einer Eingabe des Dialogpartners beeinflussen.

Das Ausgabe-Datenfeld enthält den Dialogtext, der als Sprache an den Telefonkunden übertragen werden soll. Wie bereits erwähnt, kann die Ausgabe durch unterschiedliche Ausgabeendgeräte 455 erfolgen. Neben den vorgenannten Sprachsynthese- und Abspieleinrichtungen kann die Ausgabe auch als Textausgabe auf einem Bildschirm erfolgen. Beispielsweise kann hierzu ein Telefondisplay verwendet werden. Ein Dialogobjekt kann keine, eine oder mehrere Ausgabeoptionen haben.

Das Eingabe-Datenfeld definiert Antwortfelder, Variablen oder andere Elemente, die den Ablauf des Sprachdialogs steuern können. Insbesondere werden hier die Rückgaben der Spracherkennungseinrichtung 450 angenommen.

Das Antwortoptions-Datenfeld speichert Antwortoptionen innerhalb einer Dialogkomponente. Diese können dem Benutzer entsprechend des gewählten Ausgabemediums präsentiert oder auch implizit angenommen werden. Beispielsweise können Antwortoptionen in Form einer gesprochenen Liste von Begriffen via TTS vorliegen, aber auch als Liste auf einem Telefondisplay. Implizite Antwortoptionen sind beispielsweise bei der Frage "Ist das richtig?" möglich, da hierbei dem Dialogpartner die möglichen Antworten nicht vorgesprochen zu werden brauchen. Insbesondere bestimmen Antwortoptionen die Alternativen zur Dialogverzweigung für den Anwendungsentwickler und die Entscheidungsgrundlage für das Dialogsystem.

Grammatiken definieren im Dialogobjekt die akzeptierten Äußerungen für einen Dialogschritt, zum Beispiel die möglichen Antworten auf eine Frage. Unter Grammatik ist hierbei die geordnete Beziehung zwischen Worten, Wortketten oder Phrasen innerhalb einer Äußerung zu verstehen. Grammatiken können in einer Backus-Naur-Form (BNF) oder in einer ähnlichen symbolischen Notation geschrieben werden. Im Kontext von VoiceXML beschreibt eine Grammatik eine Folge von zu sprechenden Worten, die als gültige Äußerung erkannt werden.

Ein Beispiel für eine Grammatik ist nachfolgend angegeben:

```
Staatsangehoerigkeit
[
  [finnisch finnland finne finnin]
                       {<sltStaatsangehoerigkeit "finnisch">}
  [schwedisch schweden schwede schwedin]
                       {<sltStaatsangehoerigkeit "schwedisch">}
  [daenisch daenemark daene daenin]
                       {<sltStaatsangehoerigkeit "daenisch" >}
  [irisch irland ire irin]
                       {<sltStaatsangehoerigkeit "irisch">}
  [britisch england englisch englaender englaenderin]
                       {<sltStaatsangehoerigkeit "englisch" > }
  [hollaendisch niederlaendisch holland niederlarde hollaender
  hollaenderin niederlaenderin niederlaender]
                       {<sltStaatsangehoerigkeit "niederlaendisch" >}
  [belgisch belgien belgier belgierin]
                       {<sltStaatsangehoerigkeit "belgisch" > }
  [luxemburgisch luxemburg luxemburger luxemburgerin]
                       {<sltStaatsangehoerigkeit "luxemburgisch" > }
  [franzoesisch frankreich franzose franzoesin]
                       {<sltStaatsangehoerigkeit "franzoesiach">}
  [spanisch spanien spanier spanierin]
                       {<sltStaatsangehoerigkeit "spanisch">}
  [portugiesisch portugal portugiese protugiesin]
                       {<sltStaatsangehoerigkeit "portugiesisch">}
  [italienisch italien italierner italienerin]
                       {<sltStaatsangehoerigkeit "italienisch">}
  [griechisch griechenland grieche griechin]
                       {<sltStaatsangehoerigkeit "griechisch">}
  [deutsch deutschland deutscher deutsche]
                       {<sltStaatsangehoerigkeit "deutsch"> }
]
```

Ein anderes Beispiel für die Eingabe einer Grammatik durch den Anwendungsdesigner ist in FIG. 3 im Feld 325 angegeben. Die im Dialogobjekt definierten Grammatiken können in beliebiger, aber kontextfreier Form vorliegen, insbesondere in Form einer vorkonfigurierten Datei. Dabei sind die Grammatiken nicht auf die Antwortoptionen des jeweiligen Dialogobjekts beschränkt, sondem können auch weitere gültige Äußerungen aus anderen, insbesondere hierarchisch übergeordneten Dialogobjekten beinhalten. Zum Beispiel kann ein Dialog eine generelle Hilfefunktion oder auch Navigationshilfen wie "Vor" und "Zurück" beinhalten.

Das Logik-Datenfeld definiert eine Folge von Operationen bzw. Anweisungen, die mit und durch ein Dialogobjekt durchgeführt werden. Die Operationen bzw. Anweisungen können in Form bedingter Anweisungen beschrieben werden (konditionale Logik), Bezug auf die Eingabe- und Ausgabeoptionen nehmen, Zuweisungen enthalten sowie andere Objekte referenzieren. Ein Dialogobjekt kann mehrere Einträge in dem Logik-Datenfeld haben. Diese werden in der Regel sequenziell ausgeführt. Im wesentlichen stellt das Logik-Datenfeld den Bezug der Dialogobjekte zueinander und im weiteren auch die Beziehung zu externen Prozessen dar. Darüber werden sogenannte Konnektoren realisiert, die mittels Eingabe- und Ausgabesegmenten auch externe Prozesse steuern können.

Diese Steuerung kann beispielsweise eine externe Datenversorgung aus einer Datenbank 480 einschließen. Die externe Datenbank 480 kann eine Anbindung zu den Servern 405 und 425 aufweisen und ermöglicht die Nutzung externer Datenquellen wie relationale Datenbanken, SAP-Systeme, CRM-Systeme etc. Die Anbindung der externen Datenquelle an den Server 405 dient beispielsweise der Realisierung der Konnektoren durch den Anwendungsdesigner. Die Anbindung der externen Datenquelle an den Server 425 kann für die Erstellung der dynamischen Grammatiken genutzt werden.

Alle Datenfelder eines Dialogobjekts können wechselseitig auch nicht vorhanden sein. Somit kann ein Dialogobjekt insbesondere auch nur durch eine Ausgabe oder eine Eingabe oder auch nur aus Logik-Elementen bestehen. Das Vorhandensein von Datenfeldern innerhalb eines Dialogobjekts definiert nachher auch sein Verhalten innerhalb des Dialogs. Ist zum Beispiel eine Grammatik und eine Eingabeoption vorhanden, so wird eine Eingabe erwartet, die nach Vorgabe durch die Grammatik erkannt werden soll.

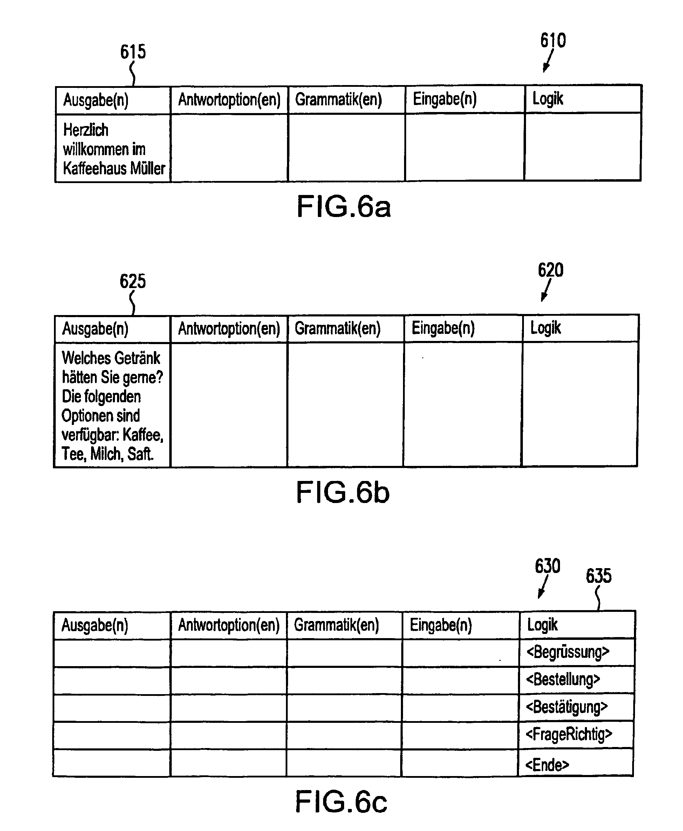

Die FIG. 6a bis 6e zeigen Beispiele einfacher Basisobjekte, die die Grundlage auch für die Erzeugung weiterer Dialogobjekte darstellen.

FIG. 6a zeigt ein Dialogobjekt 610, das aus einer einfachen Ansage "Herzlich Willkommen im Kaffeehaus Müller" besteht. Dieses Dialogobjekt ist aus dem Basisobjekt "Prompt" durch Befüllen des Ausgabe-Datenfeldes erzeugt worden. Das Prompt-Datenobjekt erlaubt generell die Ausgabe einer Textpassage, ohne den Dialogpartner zur Eingabe einer Antwort aufzufordern.

FIG. 6b zeigt ein weiteres Dialogobjekt 620, das nur im Ausgabe-Datenfeld Inhalte aufweist. Das in FIG. 6b gezeigte Dialogobjekt gibt an den Dialogpartner eine Frage und eine Angabe möglicher Antworten aus. Auch das in FIG. 6b gezeigte Dialogobjekt basiert auf dem Prompt-Dialogobjekt, obwohl die Ausgabe den Dialogpartner zur Eingabe einer Antwort auffordert. Die Behandlung der Antwort wird jedoch in einem nachfolgenden Dialogobjekt definiert.

Dies lässt erkennen, dass es erforderlich ist, eine Sequenz von Dialogobjekten zu definieren. Dies ist in FIG. 6c mit dem Dialogobjekt 630 verdeutlicht, das ein Beispiel des Sequenz-Dialogobjekts darstellt. Die im Logik-Datenfeld definierte Sequenz für die Ablaufsteuerung des Dialogflusses definiert eine Hierarchie, die vom Dialogpartner linear durchlaufen werden wird. Im Beispiel von FIG. 6c ist somit keine konditionale Logik definiert.

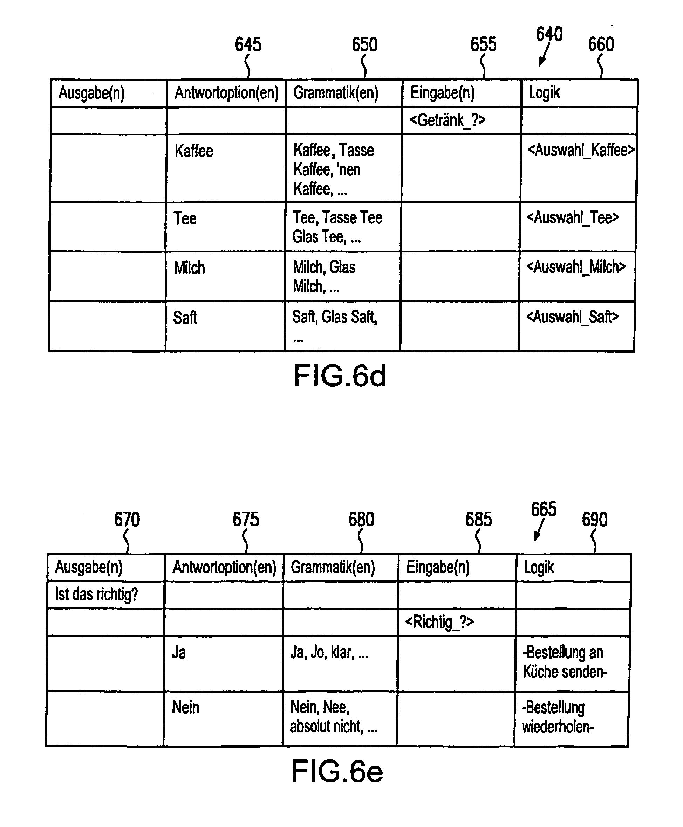

Das in FIG. 6d gezeigte Dialogobjekt 640 besteht aus einer Reihe von Antwortoptionen, Grammatiken und Logik-Instruktionen, über die die Dialogverzweigung im Sinne einer konditionalen Logik erfolgen kann. Das Dialogobjekt 640 ist somit ein Beispiel eines Konditional-Dialogobjekts und ist geeignet für die bedingte Ablaufsteuerung in Abhängigkeit der erkannten Eingabe, zum Beispiel via ASR durch den Telefonkunden. Alle notwendigen Antwortoptionen und -kombinationen werden z. B. dem Spracherkennungssystem 450 in Form einer Grammatik übergeben. Dieses liefert nach dem Erkennungsvorgang nur die entsprechende Antwortoption als Entscheidungsgrundlage zurück. Der Dialog wird dort weitergeführt, wo die Variable <Getränk_?> gleich der Auswahloption ist, wobei die Logik bestimmt, welche Anweisung ausgeführt wird. In dem in FIG. 6d gezeigten Beispiel ist die auszuführende Anweisung in jedem Fall ein einfacher Sprung.

Ein weiteres auf einem Basisobjekt beruhendes Dialogobjekt ist in FIG. 6e gezeigt. Das Dialogobjekt 665 besteht aus einer einfachen Ansage, einem Prompt und einer erwarteten Antwort. Das zugrundeliegende Eingabe-Dialogobjekt ist geeignet für die einfache Nachfrage und kann als Standardelement für verschiedene Situationen genutzt werden.

Weitere einfache Basisobjekte für die Konstruktion von Schleifen, expliziter bedingter Logik, Anbindung an von außen kommende oder nach außen gehende Datenströme etc. lassen sich ähnlich konstruieren. Diese Dialogobjekte werden dem Anwendungsdesigner ebenfalls in der Standardauswahl zur Verfügung gestellt.

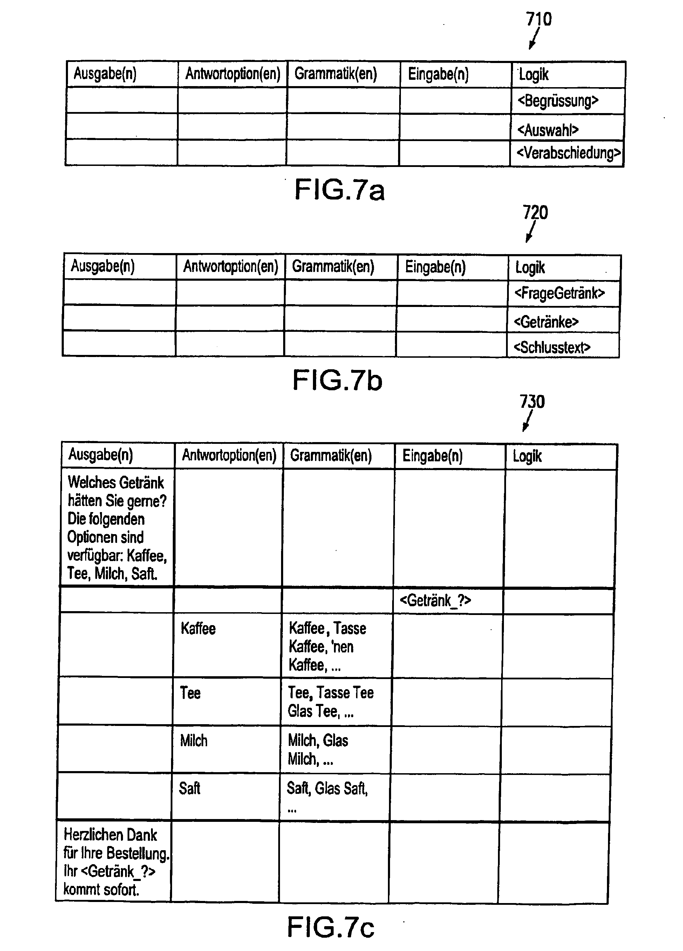

Beispiele höherwertiger Dialogobjekte sind in den FIG. 7a bis 7d gezeigt. Diese Dialogobjekte können auf den oben beschriebenen Basisobjekten schnell und einfach definiert werden, so dass Dialogobjekte durch den Anwendungsdesigner erzeugt werden können, die den logischen Dialogen und Teildialogen einer Kommunikation mit einer Person stärker ähneln.

FIG. 7a zeigt ein Dialogobjekt 710, das eine Sequenz zur Ablaufsteuerung enthält, die einen Aufruf eines Prompts zur Begrüßung, einen Aufruf einer Auswahl in einem Bestellformular und einen Aufruf eines Prompts zur Verabschiedung umfasst. Dieses Dialogobjekt ist somit ein Beispiel für eine Grundstruktur von Dialoganwendungen, die beispielsweise auf die in den FIG. 2a und 2b beschriebene Weise generiert werden kann. Das Dialogobjekt 710 ist äquivalent zu den Dialogschritten einer Begrüßung "Herzlich Willkommen im Kaffeehaus Müller". Danach wird direkt zum Dialogobjekt für eine Getränkeauswahl verzweigt und der Dialog entsprechend fortgeführt. Bei Rückkehr aus dem benannten Dialogobjekt folgt dann die zweite Ansage "Auf Wiedersehen und bis zum nächsten Mal; besuchen Sie uns bald wieder".

Das in FIG. 7b gezeigte Dialogobjekt 720 besteht ebenfalls aus einer Sequenz zur Ablaufsteuerung. Die Sequenz enthält einen Aufruf eines Prompts, der die verfügbaren Optionen ansagt, einem Aufruf einer bedingten Verzweigung zur Durchführung der Menüauswahl und einem Aufruf eines Prompts zur Verabschiedung. Dem Dialogobjekt 720 liegt das Menü-Dialogobjekt 640 zugrunde, das generell die Ausgabe einer Textpassage, die Angabe der Antwortoptionen zur Dialogverzweigung, die Angabe einer Grammatik zur Antworterkennung usw. erlaubt und so dem Anwendungsdesigner die schnelle Verknüpfung von Teildialogen zu einem kompletten Gesamtdialog ermöglicht.

Wird das in FIG. 7b gezeigte Dialogobjekt 720 ohne Sequenz-Dialogobjekt dargestellt, ergibt sich die in FIG. 7c gezeigte Darstellung. Dieses Dialogobjekt 730 könnte dann äquivalent sein zu folgendem Dialog:

| | |
|---|---|
| Computersystem: | "Welches Getränk hätten Sie gerne? Die folgenden |
| | Optionen sind verfügbar: Kaffee, Tee, Milch, Saft." |
| Telefonkunde: | "Kaffee" |
| Computersystem: | "Herzlichen Dank für Ihre Bestellung, Ihr <Getränk_?> kommt sofort". |

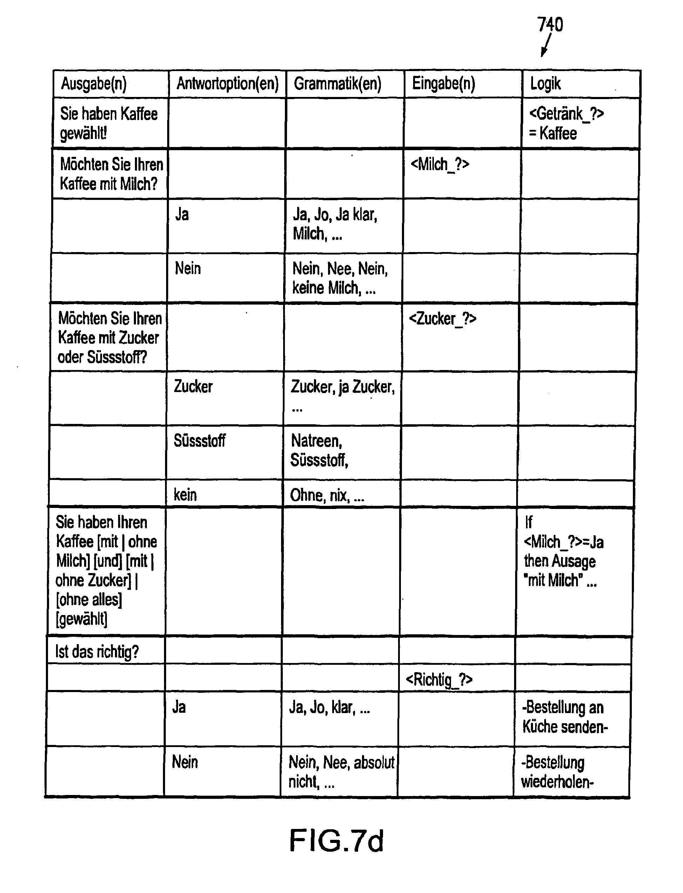

Der Dialog kann selbstverständlich noch erweitert werden. Beispielsweise kann nach der Erkennung des Getränks eine gesonderte Auswahl für weitere Nachfragen angesprungen werden, wie dies in FIG. 7d verdeutlicht ist.

Das dort gezeigte Dialogobjekt 740 umfasst eine Sequenz zur Ablaufsteuerung mit einem Aufruf eines Prompts zur Einleitung, einem Aufruf einer bedingten Abfrage zur Milchauswahl, einem Aufruf einer bedingten Abfrage zur Zuckerauswahl, einem Aufruf eines Dialogobjekts für die Zusammenfassung der Bestellung und einem Aufruf eines Eingabe-Dialogobjekts zur Nachfrage, ob alle Daten richtig erfasst wurden. Das in FIG. 7d gezeigte Dialogobjekt bildet unter anderem folgenden Beispielsdialog ab:

| | |
|---|---|
| Computersystem: | "Sie haben Kaffee gewählt. Möchten Sie Ihren Kaffee mit Milch?" |
| Telefonkunde: | "Ja". |
| Computersystem: | "Möchten Sie Ihren Kaffee mit Zucker oder Süßstoff?" |
| Telefonkunde: | "Zucker" |
| Computersystem: | "Sie haben Ihren Kaffee mit Milch und Zucker gewählt." |
| Computersystem: | "Ist das richtig?" |
| Telefonkunde: | "Ja" |

Wie aus dem vorhergehenden deutlich ist, ermöglicht die Erfindung den Aufbau einer in einem Computersystem implementierten Dialogsteuerung durch Auswählen von Dialogobjekten und Befüllen von Datenfeldern der ausgewählten Dialogobjekte. Die Auswahl und das Befüllen wird dem Anwendungsdesigner mittels einer Softwareplattform ermöglicht, so dass der Anwendungsdesigner keine spezifischen Programmierkenntnisse besitzen muss. Zur weiteren Vereinfachung kann dem Anwendungsdesigner ein softwarebasierter Hilfeassistent als Wizard zur Verfügung gestellt werden, wie in den FIG. 2a, 2b und 3 gezeigt, der zu jedem Zeitpunkt die möglichen Optionen für das weitere Vorgehen erläutert. Für fortgeschrittenere Anwendungsdesigner kann ein Expertenmodus vorgesehen sein, der die direkte Eingabe der Daten mittels eines Editors ermöglicht. Des weiteren kann die Auswahl eines Dialogobjekts und das Befüllen eines Datenfeldes auch mittels einer Skriptsprache erfolgen.

Wie zuvor beschrieben, werden die vom Anwendungsdesigner definierten Dialogobjekte als Metadaten an den Server 425 oder 475 übermittelt, wobei dann der Server 425 unter Zuhilfenahme von Objekt- und Grammatikbibliotheken dynamisch einen Programmiercode beispielsweise auf Grundlage des VoiceXML-Standards erzeugt. In einer anderen bevorzugten Ausgestaltung wird die Programmiercodeerzeugung direkt vom Webserver 405 oder vom Computersystem 440 durchgeführt, so dass ein separater Server 425 nicht vorgesehen sein muss. Auch der Server 475 kann auf einem der anderen Server oder Computersysteme realisiert sein und muss daher ebenfalls nicht separat vorgesehen sein. In wiederum einer weiteren Ausführung kann der Server 425 ein Java-Application-Server sein.

Wie anhand der Beispiele in den FIG. 6a bis 6e und 7a bis 7d beschrieben, kann der Anwendungsdesigner auf der Grundlage von Basisobjekten höherwertige Dialogobjekte erstellen. Die Basisobjekte und höherwertigen Dialogobjekte werden vorzugsweise in einer objektorientierten Programmstruktur mit Vererbungshierarchie abgespeichert.

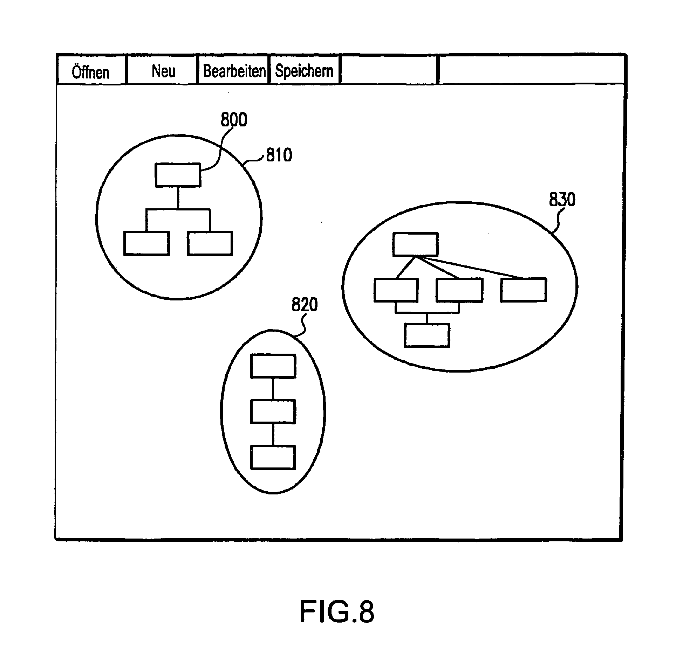

Ein Beispiel für die Editierung von Objekten durch den Entwickler oder Administrator ist in FIG. 8 zu sehen. Es wird hierzu vorzugsweise eine Software verwendet, die auf dem Server 405 läuft und dem Administrator eine Bildschirmdarstellung präsentiert, die die verschiedenen Objekte 800 visuell erfassbar darstellt. Die Objekte können hierarchisch als Baumstruktur dargestellt werden, um die Ablaufsteuerung zu repräsentieren. In FIG. 8 entspricht beispielsweise die Struktur 810 einem Auswahldialog zur Selektion von alternativen Dialogpfaden, beispielsweise mittels des Menüobjekts. Die Struktur 820 repräsentiert eine Anweisungssequenz zur dezidierten Ausführung von Dialogschritten, z.B. zum Zugriff auf eine Datenbank. Die Struktur 830 stellt hingegen einen Fragedialog dar zum Befüllen von Datenfeldern. Die in den Strukturen miteinander verbundenen Objekte 800 können beispielsweise durch Mausklick ausgewählt werden, um geändert, ergänzt, gelöscht oder verschoben zu werden.

In einer bevorzugten Ausgestaltung sind die Dialogobjekte und das Computersystem eingerichtet, um den mit dem Dialogpartner zu führenden Dialog zu personalisieren. Hierzu ermittelt das Computersystem 440 ein Profil des Dialogpartners 470, basierend auf persönlichen Informationen, die vorzugsweise vom Benutzer angegeben worden sind. Hierzu gehören beispielsweise Alter, Geschlecht, persönliche Vorlieben, Hobbies, Mobilfunktelefonnummer, E-Mail-Adresse etc. bis hin zu relevanten Informationen für die Transaktionsverarbeitung im M-Commerce-Bereich, nämlich Kontoverbindungsdaten, Informationen zum Mobile Payment oder Kreditkartendaten. Die Personalisierung des Dialogs kann auch abhängig vom Ort des Dialogpartners oder von anderen Angaben wie etwa Zahlungsinformationen erfolgen. Sind beispielsweise Zahlungsinformationen vorhanden, kann der Benutzer direkt in eine Kauftransaktion einsteigen. Andernfalls würde eine Anwendung diese Option nicht erlauben und evtl. erst die Daten erfassen und bestätigen lassen. Eine weitere Alternative bieten Informationen zu Geschlecht und Alter. Sprachanwendungen können hier mit unterschiedlichen Interface-Figuren agieren. Beispielsweise kann die mit dem Dialogpartner 470 sprechende Computerstimme bei einem jüngeren Teilnehmer einen frechen, quirligen und jugendlichen Tonfall annehmen.

Eine weiter bevorzugte Ausgestaltung der Erfindung sieht die Möglichkeit vor, nicht nur die Dialogführung sondern auch das erfindungsgemäße Verfahren zum Aufbau einer Dialogsteuerung über das Telefon vornehmen zu können. Beispielsweise erstellt der Anwendungsdesigner 410 über eine Webseite auf dem Webserver 405 eine Dialogsteuerung, die dem Telefonkunden 470 das Befüllen von Datenfeldern ermöglicht. Eine solche erzeugte Dialoganwendung kann beispielsweise dem Telefonkunden 470 die Konfiguration eines im Netz befindlichen virtuellen Anrufbeantworters (Voicebox) ermöglichen. Der Anwendungsdesigner 410 sieht hierbei ein Dialogobjekt vor, das den Telefonkunden 470 auffordert, eine Ansage aufzusprechen. Die Ansage wird dann in einem Datenfeld eines anderen Dialogobjekts abgespeichert.

Eine weitere bevorzugte Ausgestaltung der Erfindung sieht die Möglichkeit vor, Metadaten auf der Grundlage des ausgewählten Dialogobjekts und des Inhalts von Datenfeldern zu erzeugen, wobei mittels Metadaten dynamisch zur Laufzeit, d.h. bei Durchführung der Dialogsteuerung, Programmiercode erzeugt wird, der kompatibel zu einem Format für die Nutzung von Standard-IVR- (Interactive Voice Response) oder Sprachdialog- bzw. multimodalen Dialog-Systemen ist. In einem weiteren Schritt werden dann diese Metadaten vorzugsweise in dem Computersystem oder einer externen Datenbank (485) implementiert. Alternativ wird der Programmiercode in einer Standard-Maschinensprache für die Dialogverarbeitung in einem Telephoniesystem vorzugsweise in einem SALT-Code (Speech Application Language Tags) oder einem WML-Code erzeugt.

Eine weitere Alternative dieser bevorzugten Ausgestaltung der Erfindung sieht die Möglichkeit vor, dass das Dialogobjekt Ereignisse detektiert, die von anderen Dialogobjekten oder dem Computersystem generiert werden, und/oder die Dialogsteuerung in Abhängigkeit von detektierten Ereignissen durchführt. Auf diese Art werden externe Ereignisse, auch asynchroner Natur, in den Dialogablauf direkt integriert.

Für die Integration von Ereignissen in einen zeitweise terminierten Dialogablauf muss die Steuereinheit 430 in die Lage versetzt werden, auch auf Ereignisse einzugehen, die nicht in einer direkten Verbindung stattfinden. Insbesondere muss eine externe "Anruffunktion", also eine Wiederaufnahme des Dialogs, den Dialog in einer gewünschten oder einer gerade in der Situation möglichen Modalität wieder aufnehmen. Dazu ist das Dialogobjekt ausgestaltet, um einen Status der Dialogsteuerung abzuspeichern, in Abhängigkeit von einem ersten detektierten Ereignis die Dialogsteuerung abzubrechen und in Abhängigkeit von einem zweiten detektierten Ereignis die Dialogsteuerung mittels des abgespeicherten Status die Dialogsteuerung fortzusetzen.

Eine zusätzliche Alternative dieser bevorzugten Ausgestaltung der Erfindung sieht erweiterte orthogonale Eigenschaften für Dialogobjekte vor, die vorzugsweise Eigenschaften für Hilfs-, Fehlerbehandlungs-, Sprach- oder Sprachcharakterfunktionen (Persona) betreffen. Diese Objekteigenschaften werden vorzugsweise auch in Form von Metadaten in Objekten gespeichert und sind somit als orthogonale Eigenschaften auch auf nachgelagerte Dialogobjekte vererbbar. Sie können aber auch durch andere Angaben oder Eigenschaften überlagert werden. Diese Eigenschaften können zur Laufzeit/Anrufzeit des Dialogs geändert werden. Eben und insbesondere auch während des laufenden Dialogs. Dies gilt z.B. für Sprache (z.B. von Englisch nach Deutsch nach Französisch - bei entsprechender System- und Objektkonfiguration) oder Person (von männlicher Sprecher auf weibliche Sprecherin und zurück).

Bei den oben beschriebenen bevorzugten Ausgestaltungen der Erfindung hat die zentraler Ablage des Dialogobjekts in Form von zentraler wohldefinierter Metadaten-Beschreibung in einer Datenbank 485 den Vorteil einer kontrollierten Entwicklung von Objekten und deren Versionierung für eine Anwendung sowie über Anwendungsgrenzen hinweg. Der Entwickler kann über eine graphische Schnittstelle 420 des Webservers 405 auf diese Versionierung zugreifen. Wohldefinierte Metadaten erlauben dabei wohldefinierte Interaktionsmechanismen für Dialogobjekte untereinander, für die Interaktion mit unterschiedlichen Schnittstellen zu graphischen Benutzerschnittstellen 405 und für die Interaktion mit unterschiedlichen Schnittstellen zu der systemintemen Steuerungseinheit 430.

Darüber hinaus erlaubt die Nutzung der Metadaten aus zentralem Register eine konsistente wohldefinierte Entnahme von Dialogobjekten zur Erstellung von Programmiercode zur Laufzeit - genauer zur Dialogzeit/Anrufzeit. Die zentrale Verwaltung der Metadaten in einer Datenbank 480 ermöglicht die persistente, d.h. dauerhafte und in der Regel - und insbesondere im Desaster-Fall - unveränderliche Speicherung der gesamten Objektinformation und letztendlich auch der Voice Applikation / Sprachanwendung. Dadurch wird die Anwendungssicherheit im Sinne der Verfügbarkeit einer Anwendung deutlich verbessert. Dies ist ein wesentlicher Aspekt für Anwendungen im Bereich von Telephonieanwendungen, da hier eine Erwartungshaltung von 100% Verfügbarkeit von Telephoniediensten besteht.

Wohldefinierte zentrale Metadaten erlauben eine Erweiterung (Upgrade) der Metadatenstruktur durch zentrale Mechanismen. Dialogobjekte können so einheitlich und schnell dem aktuellen Technikstandard angepasst werden, ohne in die Logik/Semantik der Objekte eingreifen zu müssen. Die Speicherung (480) erfolgt insbesondere unabhängig von der Datenbankstruktur, so dass die Speicherung auch über verteilte Systeme erfolgen kann.

Der Erfindungsumfang wird durch die Patentansprüche angegeben. Bevorzugte Ausgestaltungen sind in den Unteransprüchen angegeben.

## Patentansprüche

1. Verfahren zum Aufbau einer in einem Computersystem (440) implementierten sprachbasierten Dialogsteuerung, die das Computersystem durch Ausgabe von Aufforderungen an einen Dialogpartner (470),und Auswerten von Eingaben des Dialogpartners (470) in Reaktion auf die Aufforderungen steuert, wobei das Verfahren die folgenden Schritte umfasst:
Empfangen (510) einer Eingabe von einem Benutzer (410) zum Auswählen eines Dialogobjekts (610, 620, 630, 640, 665, 710, 720, 730, 740), das ein Datenelement mit wenigstens einem Datenfeld (615, 625, 635, 645, 650, 655, 660, 670, 675, 680, 685, 690) ist, dessen Inhalt eine Aufforderung an den Dialogpartner (470) oder einen Parameter angibt, der bei Durchführung der Dialogsteuerung die Auswertung einer. Eingabe des Dialogpartners (470) beeinflusst; und
Empfangen (510) einer Eingabe von dem Benutzer (410) zum Festlegen des Inhalts des wenigstens einen Datenfeldes des ausgewählten Dialogobjekts,
wobei das Dialogobjekt eingerichtet ist, um bei Durchführung der Dialogsteuerung das Computersystem (440) in Abhängigkeit von dem ausgewählten Dialogobjekt und dem festgelegten Inhalt des wenigstens einen Datenfeldes des ausgewählten Dialogobjekts zu steuern, und
wobei das Dialogobjekt eingerichtet ist, um das Computersystem zu veranlassen, den Tonfall der Computerstimme der sprachbasierten Dialogsteuerung in Abhängigkeit von einem vom Computersystem ermittelten Personenprofil des Dialogpartners zu ändern.

2. Verfahren nach Anspruch 1, ferner die folgenden Schritt umfassend:
Erzeugen (520) von Metadaten auf der Grundlage des ausgewählten Dialogobjekts und des festgelegten Inhalts des wenigstens einen Datenfeldes, wobei die Metadaten geeignet sind, um dynamisch zur Laufzeit, d.h. bei Durchführung der Dialogsteuerung, Programmiercode zu erzeugen, dessen Ausführung die Dialogsteuerung bewirkt; und
Implementieren (540) der Metadaten in dem Computersystem oder einer externen Datenbank (485).

3. Verfahren nach Anspruch 2, wobei der erzeugte Programmiercode kompatibel zu einem Format für die Nutzung von Standard-IVR- (Interactive Voice Response) oder Sprachdialog- bzw. multimodalen Dialog-Systemen ist.

4. Verfahren nach einem der Ansprüche 1 bis 3, wobei das Dialogobjekt aus einer Vielzahl von Dialogobjekten auswählbar ist und die Vielzahl von Dialogobjekten ein Menüobjekt (720, 730, 740) umfasst, das bei Durchführung der Dialogsteuerung das Computersystem veranlasst, eine Aufforderung an den Dialogpartner auszugeben, eine von mehreren Auswahloptionen auszuwählen.

5. Verfahren nach einem der Ansprüche 1 bis 4, wobei das Dialogobjekt aus einer Vielzahl von Dialogobjekten auswählbar ist und die Vielzahl von Dialogobjekten ein Konditional-Objekt (640) umfasst, das bei Durchführung der Dialogsteuerung - das Computersystem veranlasst, eine bedingte Ablaufsteuerung in Abhängigkeit einer ausgewerteten Eingabe des Dialogpartners zu ermöglichen.

6. Verfahren nach einem der Ansprüche 1 bis 5, wobei das Dialogobjekt eingerichtet ist, um bei Durchführung der Dialogsteuerung das Computersystem zu veranlassen, die Vielzahl möglicher Eingaben auf einem Display eines Telefons, PDAs oder SmartPhones des Dialogpartners anzuzeigen.

7. Verfahren nach einem der Ansprüche 1 bis 6, wobei das Dialogobjekt eingerichtet ist, um bei Durchführung der Dialogsteuerung das Computersystem zu veranlassen, eine Fehlerbehandlungsroutine zu starten, wenn nach Auswertung einer Eingabe des Dialogpartners keine der möglichen Eingaben ermittelt werden konnte.

8. Verfahren nach einem der Ansprüche 1 bis 7, wobei das Dialogobjekt um orthogonale Eigenschaften für Hilfe-, Fehlerbehandlungs-, Sprach- und Sprachcharakterfunktionen erweitert ist.

9. Verfahren nach Anspruch 8, wobei die orthogonalen Eigenschaften in Form von Metadaten beschrieben und die orthogonale Eigenschaften auf andere Dialogobjekte vererbbar sind.

10. Computerprogrammprodukt mit einem Speichermedium mit gespeichertem Programmcode, der Befehle zur Durchführung des Verfahrens nach einem der Ansprüche 1 bis 9 enthält.

11. Vorrichtung zum Aufbau einer in einem Computersystem implementierten sprachbasierten Dialogsteuerung, die das Computersystem durch Ausgabe von Aufforderungen an einen Dialogpartner und Auswerten von Eingaben des Dialogpartners in Reaktion auf die Aufforderungen steuert, umfassend:
eine Einrichtung (420, 485, 435) zum Speichern von Dialogobjekten, wobei ein Dialogobjekt ein Datenelement mit wenigstens einem Datenfeld ist, dessen Inhalt eine Aufforderung an den Dialogpartner oder einen Parameter angibt, der bei Durchführung der Dialogsteuerung die Auswertung einer Eingabe des Dialogpartners beeinflusst, wobei die Dialogobjekte eingerichtet sind, um bei Durchführung der Dialogsteuerung das Computersystem in Abhängigkeit von einem ausgewählten Dialogobjekt und einem festgelegten Inhalt des wenigstens einen Datenfeldes des ausgewählten Dialogobjekts zu steuern; und
eine Einrichtung (415) zum Empfangen einer Eingabe zum Auswählen eines Dialogobjekts und zum Festlegen des Inhalts des wenigstens einen Datenfeldes des ausgewählten Dialogobjekts,
wobei das Dialogobjekt eingerichtet ist, um das Computersystem zu veranlassen, den Tonfall der Computerstimme der sprachbasierten Dialogsteuerung in Abhängigkeit von einem vom Computersystem ermittelten Personenprofil des Dialogpartners zu ändern.

12. Vorrichtung nach Anspruch 11, eingerichtet zur Durchführung des Verfahrens nach einem der Ansprüche 1 bis 9.

13. Computersystem zur Durchführung einer sprachbasierten Dialogsteuerung, umfassend:
eine Einrichtung (455) zur Ausgabe von Aufforderungen an einen Dialogpartner; und
eine Einrichtung (445, 450) zum Auswerten von Eingaben des Dialogpartners in Reaktion auf die Aufforderungen,
wobei das Computersystem eingerichtet ist zur Durchführung der Dialogsteuerung in Abhängigkeit von wenigstens, einem Dialogobjekt, das ein Datenelement mit wenigstens einem Datenfeld ist, dessen Inhalt eine Aufforderung an den Dialogpartner oder einen Parameter angibt, der bei Durchführung der Dialogsteuerung die Auswertung einer Eingabe des Dialogpartners beeinflusst, wobei das Computersystem ferner eingerichtet ist zur Durchführung der Dialogsteuerung in Abhängigkeit von dem Inhalt wenigstens eines Datenfeldes, und
wobei das Computersystem eingerichtet ist zur Ermittlung eines Personenprofils des Dialogpartners und zur Änderung des Tonfalls der Computerstimme der sprachbasierten Durchführung der Dialogsteuerung in Abhängigkeit vom ermittelten Personenprofil des Dialogpartners.

14. Computersystem nach Anspruch 13, eingerichtet zur Durchführung des Verfahrens nach einem der Ansprüche 1 bis 9.

15. Computersystem nach Anspruch 13 oder 14, ferner eine Einrichtung (445) umfassend zum Zugreifen auf Metadaten, die die Dialogsteuerung beschreiben, und Erstellen von Programmiercode aus den Metadaten während der Dialogsteuerung, wobei die Ausführung des Programmiercodes die Durchführung der Dialogsteuerung bewirkt.

## Claims

1. A method for forming a speech-based dialogue control, implemented in a computer system (440), said dialogue control controlling the computer system by the output of requests to a dialogue partner (470) and the evaluation of inputs from the dialogue partner (470) in reaction to the requests, wherein the method comprises the following steps:
receiving (510) an input from a user (410) for the selection of a dialogue object (610, 620, 630, 640, 665, 710, 720, 730 740), which is a data element with at least one data field (615, 625, 635, 645, 650, 655, 660, 670, 675, 680, 685, 690), the contents of which specify a request to the dialogue partner (470) or a parameter, which influences the evaluation of an input from the dialogue partner (470) during the execution of the dialogue control; and
receiving (510) an input from a user (410) for the definition of the content of the at least one data field of the selected dialogue object;
wherein the dialogue object is set up to control the computer system (440) during the execution of the dialogue control in dependence of the selected dialogue object and the defined content of the at least one data field of the selected dialogue object, and
wherein the dialogue object is set up to cause the computer system to change the tone of the computer voice of the speech-based dialogue control in dependence of a person profile of the dialogue partner determined by the computer system.

2. The method according to Claim 1, further comprising the following step:
generating (520) metadata based on the selected dialogue object and the defined content of at least one data field, wherein the metadata is suitable for the generation of programming code dynamically during run-time, i.e. during execution of the dialogue control, the execution of the said programming code realising the dialogue control; and
implementing (540) the metadata in the computer system or an external data base (485).

3. The method according to Claim 2, wherein the generated programming code is compatible to a format for the use of standard IVR (Interactive Voice Response) or voice dialogue or multimodal dialogue systems.

4. The method according to one of Claims 1 to 3, wherein the dialogue object can be selected from a number of dialogue objects and the number of dialogue objects comprises a menu object (720, 730, 740) which during the execution of the dialogue control causes the computer system to output a request to the dialogue partner for the selection of one of a number of menu options.

5. The method according to one of Claims 1 to 4, wherein the dialogue object can be selected from a number of dialogue objects and the number of dialogue objects includes a conditional object (640), which during the execution of the dialogue control causes the computer system to enable a conditional sequence control in dependence of an evaluated input from the dialogue partner.

6. The method according to one of Claims 1 to 5, wherein the dialogue object is set up to cause the computer system, during the execution of the dialogue control, to display the many possible inputs on a display of a telephone, PDA or SmartPhone of the dialogue partner.

7. The method according to one of Claims 1 to 6, wherein the dialogue object is set up to cause the computer system, during the execution of the dialogue control, to start an error handling routine, if after the evaluation of an input from the dialogue partner, none of the possible inputs could be determined.

8. The method according to one of Claims 1 to 7, wherein the dialogue object is extended by orthogonal characteristics for auxiliary, error-handling, speech and speech character functions.

9. The method according to Claim 8, wherein the orthogonal characteristics are described in the form of metadata and the orthogonal characteristics can be handed down to other dialogue objects.

10. A computer program product having a memory medium having stored programming code which contains instructions for carrying out the method according to one of Claims 1 to 9.

11. An apparatus for forming a dialogue control implemented in a speech-based computer system, the said dialogue control controlling the computer system through the output of requests to a dialogue partner and the evaluation of inputs from the dialogue partner in reaction to the requests, comprising:
a unit (420, 485, 435) for saving dialogue objects, wherein a dialogue object is a data element with at least one data field, the content of which specifies a request to the dialogue partner or a parameter, which influences the evaluation of an input from the dialogue partner during the execution of the dialogue control, wherein the dialogue objects are set up to control the computer system in dependence of a selected dialogue object and a defined content of at least one data field of the selected dialogue object during the execution of the dialogue control; and
a unit (415) for receiving an input for selecting a dialogue object and for defining the content of the at least one data field of the selected dialogue object;
wherein the dialogue object is set up to cause the computer system to change the tone of the computer voice of the speech-based dialogue control in dependence of a person profile of the dialogue partner determined by the computer system.

12. The apparatus according to Claim 11, set up for executing the method according to one of Claims 1 to 9.

13. A computer system for executing a speech-based dialogue control, comprising:
a unit (455) for outputting requests to a dialogue partner; and
a unit (445, 450) for evaluating inputs from the dialogue partner in reaction to the requests,
wherein the computer system is set up for the execution of the dialogue control in dependence of at least one dialogue object which is a data element with at least one data field the content of which specifies a request to the dialogue partner or a parameter, which influences the evaluation of an input from the dialogue partner during the execution of the dialogue control, wherein the computer system is also set up for the execution of the dialogue control in dependence of the content of at least one data field,
wherein the computer system is set up to determine a person profile of the dialogue partner and to change the tone of the computer voice of the speech-based execution of the dialogue control in dependence of the determined person profile of the dialogue partner.

14. The computer system according to Claim 13, set up for the execution of the method according to one of Claims 1 to 9.

15. The computer system according to Claim 13 or 14, further comprising a unit (445) for accessing metadata which describes the dialogue control and for generating programming code from the metadata during the dialogue control, wherein the implementation of the programming code gives rise to the execution of the dialogue control.

## Revendications

1. Procédé pour construire une commande conversationnelle à base vocale appliquée dans un système informatique (440), qui commande ledit système informatique grâce à l'émission d'invitations adressées à un partenaire de dialogue (470) et à l'analyse d'entrées faites par celui-ci en réaction aux invitations, le procédé comprenant les étapes suivantes:
réception (510) d'une entrée par un utilisateur (410) pour sélectionner un objet de dialogue (610, 620, 630, 640, 665, 710, 720, 730, 740) qui est constitué par un élément de données avec au moins un champ de données (615, 625, 635, 645, 650, 655, 660, 670, 675, 680, 685, 690) dont le contenu indique une invitation adressée au partenaire de dialogue (470) ou un paramètre qui influe, lors de l'exécution de la commande conversationnelle, sur l'analyse d'une entrée du partenaire (470); et
réception (510) d'une entrée par l'utilisateur (410) pour fixer le contenu dudit champ de données de l'objet de dialogue sélectionné,
l'objet de dialogue étant installé pour commander le système informatique (440), lors de l'exécution de la commande conversationnelle, en fonction de l'objet de dialogue sélectionné et du contenu fixé dudit champ de données de l'objet de dialogue sélectionné, et
l'objet de dialogue étant installé pour amener le système informatique à modifier le ton de la voix informatique de la commande conversationnelle à base vocale en fonction d'un profil de personne du partenaire de dialogue déterminé par le système informatique.

2. Procédé selon la revendication 1, comportant également les étapes suivantes:
production (520) de métadonnées sur la base de l'objet de dialogue sélectionné et du contenu fixé dudit champ de données, les métadonnées étant aptes à générer de manière dynamique en cours d'exécution, c'est-à-dire lors de l'exécution de la commande conversationnelle, un code de programmation dont l'exécution entraîne la commande conversationnelle ; et
application (540) des métadonnées dans le système informatique ou dans une banque de données extérieure (485).

3. Procédé selon la revendication 2, selon lequel le code de programmation généré est compatible avec un format pour l'utilisation de systèmes standard IVR (Interactive Voice Response, soit serveur vocal interactif) ou de systèmes de dialogue vocal ou de systèmes de dialogue multimode.

4. Procédé selon l'une des revendications 1 à 3, selon lequel l'objet de dialogue peut être sélectionné parmi une multiplicité d'objets de dialogue, et cette multiplicité d'objets de dialogue comprend un objet de menu (720, 730, 740) qui, lors de l'exécution de la commande conversationnelle, amène le système informatique à émettre une invitation adressée au partenaire du dialogue pour que celui-ci sélectionne une option parmi d'autres.

5. Procédé selon l'une des revendications 1 à 4, selon lequel l'objet de dialogue peut être sélectionné parmi une multiplicité d'objets de dialogue et cette multiplicité d'objets de dialogue comprend un objet conditionnel (640) qui, lors de l'exécution de la commande conversationnelle, amène le système informatique à permettre une commande de déroulement conditionnelle en fonction d'une entrée analysée du partenaire de dialogue.

6. Procédé selon l'une des revendications 1 à 5, selon lequel l'objet de dialogue est installé pour amener le système informatique, lors de l'exécution de la commande conversationnelle, à afficher sur l'affichage d'un téléphone, d'un PDA ou d'un smart phone du partenaire du dialogue la multiplicité des entrées possibles.

7. Procédé selon l'une des revendications 1 à 6, selon lequel l'objet de dialogue est installé pour amener le système informatique, lors de l'exécution de la commande conversationnelle, à démarrer une procédure de traitement d'erreurs si aucune des entrées possibles n'a pu être déterminée après analyse d'une entrée du partenaire du dialogue.

8. Procédé selon l'une des revendications 1 à 7, selon lequel l'objet de dialogue est étendu avec des caractéristiques orthogonales pour des fonctions d'aide, des fonctions de traitement d'erreurs, des fonctions vocales et des fonctions à caractère vocal.

9. Procédé selon la revendication 8, selon lequel les caractéristiques orthogonales sont décrites sous forme de métadonnées et sont aptes à être transmises à d'autres objets de dialogue.

10. Produit de programme informatique comportant un moyen de mise en mémoire avec un code de programme mis en mémoire qui contient des ordres pour l'exécution du procédé selon l'une des revendications 1 à 9.

11. Dispositif pour construire une commande conversationnelle à base vocale appliquée dans un système informatique, qui commande ledit système informatique grâce à l'émission d'invitations adressées à un partenaire de dialogue et à l'analyse d'entrées faites par celui-ci en réaction aux invitations, comprenant:
un dispositif (420, 485, 435) pour mettre en mémoire des objets de dialogue, un objet de dialogue étant constitué par un élément de données avec au moins un champ de données dont le contenu indique une invitation adressée au partenaire de dialogue ou un paramètre qui influe, lors de l'exécution de la commande conversationnelle, sur l'analyse d'une entrée du partenaire, les objets de dialogue étant installés pour commander le système informatique, lors de l'exécution de la commande conversationnelle, en fonction d'un objet de dialogue sélectionné et d'un contenu fixé dudit champ de données de l'objet de dialogue sélectionné ; et
un dispositif (415) pour recevoir une entrée pour sélectionner un objet de dialogue et pour fixer le contenu dudit champ de données de l'objet de dialogue sélectionné,
l'objet de dialogue étant installé pour amener le système informatique à modifier le ton de la voix informatique de la commande conversationnelle à base vocale en fonction d'un profil de personne du partenaire de dialogue déterminé par le système informatique.

12. Dispositif selon la revendication 11, installé pour la mise en oeuvre du procédé selon l'une des revendications 1 à 9.

13. Système informatique pour exécuter une commande conversationnelle à base vocale, comprenant:
un dispositif (455) pour émettre des invitations adressées à un partenaire de dialogue ; et
un dispositif (445, 450) pour analyser des entrées du partenaire de dialogue en réaction aux invitations,
le système informatique étant installé pour exécuter la commande conversationnelle en fonction d'au moins un objet de dialogue qui est constitué par un élément de données avec au moins un champ de données dont le contenu indique une invitation adressée audit partenaire ou un paramètre qui influe, lors de l'exécution de la commande conversationnelle, sur l'analyse d'une entrée du partenaire, et le système informatique étant installé en outre pour exécuter la commande conversationnelle en fonction du contenu d'au moins un champ de données, et
le système informatique étant installé pour déterminer un profil de personne du partenaire de dialogue et pour modifier le ton de la voix informatique de l'exécution à base vocale de la commande conversationnelle en fonction du profil de personne du partenaire qui a été déterminé.

14. Système informatique selon la revendication 13, installé pour la mise en oeuvre du procédé selon l'une des revendications 1 à 9.

15. Système informatique selon la revendication 13 ou 14, comportant également un dispositif (445) pour accéder à des métadonnées qui décrivent la commande conversationnelle, et pour établir un code de programmation à partir des métadonnées pendant la commande conversationnelle, l'exécution du code de programmation provoquant l'exécution de la commande conversationnelle.
